# EUROPÄISCHE PATENTSCHRIFT

(11) **EP 1 635 640 B1**
(45) Veröffentlichungstag und Bekanntmachung des Hinweises auf die Patenterteilung: **21.03.2012**
(21) Anmeldenummer: 04734671.3
(22) Anmeldetag: 25.05.2004
(51) Int. Cl.: A01N 43/56

(54) **HERBIZIDE MITTEL ENTHALTEND 3-AMINOBENZOYLPYRAZOLE UND SAFENER**
HERBICIDAL AGENTS CONTAINING 3-AMINO BENZOYLPYRAZOLES AND SAFENERS
HERBICIDES CONTENANT DES 3-AMINOBENZOYLPYRAZOLES ET DES PHYTOPROTECTEURS

(30) Priorität: 06.06.2003 DE 10325659
(43) Veröffentlichungstag der Anmeldung: 22.03.2006
(73) Patentinhaber: Bayer CropScience AG, 40789 Monheim (DE)
(72) Erfinder: SCHMITT, Monika H., 60318 Frankfurt (DE); WILLMS, Lothar, 65719 Hofheim (DE); ZIEMER, Frank, 65830 Kriftel (DE); ROSINGER, Christopher, 65719 Hofheim (DE); HACKER, Erwin, 65239 Hochheim (DE); BIERINGER, Hermann, 65817 Eppstein (DE)
(86) Internationale Anmeldenummer: PCT/EP2004/005585
(87) Internationale Veröffentlichungsnummer: WO 2004/107858

(56) Entgegenhaltungen:
- WO-A-99/16744
- WO-A-99/66795
- WO-A-02/098229
- WO-A-03/043423
- WO-A-2004/021788
- FR-A- 2 762 188
- US-A- 5 824 802

## Beschreibung

Die Erfindung betrifft das technische Gebiet der Pflanzenschutzmittel, insbesondere Herbizid-Antidot-Kombinationen (Wirkstoff-Safener-Kombinationen), die für den Einsatz gegen konkurrierende Schadpflanzen in Nutzpflanzenkulturen geeignet sind.

Zahlreiche herbizide Wirkstoffe sind als Inhibitoren des Enzyms p-Hydroxyphenyl-Pyruvat-Dioxygenase (HPPD) bekannt. In jüngerer Zeit wurden beispielsweise in US 5,824,802 und WO 96/26206 weitere solcher Wirkstoffe offenbart.

Wie bei vielen anderen herbiziden Wirkstoffen sind auch diese Inhibitoren der HPPD nicht immer ausreichend verträglich mit (d.h. nicht selektiv genug bei) einigen wichtigen Kulturpflanzen, wie Mais, Reis oder Getreide, so daß ihrem Einsatz enge Grenzen gesetzt sind. Sie können deshalb in manchen Kulturen nicht oder nur in so geringen Aufwandmengen eingesetzt werden, daß die erwünschte breite herbizide Wirksamkeit gegenüber Schadpflanzen nicht gewährleistet ist. Speziell können viele der genannten Herbizide nicht vollständig selektiv gegen Schadpflanzen in Mais, Reis, Getreide, Zuckerrohr und einigen anderen Kulturen eingesetzt werden.

Zur Überwindung dieser Nachteile ist es bekannt, herbizide Wirkstoffe in Kombination mit einem sogenannten Safener oder Antidot einzusetzen. So sind beispielsweise in WO 99/66795, WO 02/098229 und WO 03/043423 verschiedene Kombinationen von bestimmten Inhibitoren der HPPD mit Safenem beschrieben.

Unter einem Safener ist eine Verbindung zu verstehen, die die phytotoxischen Eigenschaften eines Herbizides gegenüber Nutzpflanzen aufhebt oder verringert, ohne daß die herbizide Wirkung gegenüber Schadpflanzen wesentlich vermindert wird.

Die Auffindung eines Safeners für eine bestimmte Gruppe von Herbiziden ist nach wie vor eine schwierige Aufgabe, da die genauen Mechanismen, durch die ein Safener die Schadwirkung von Herbiziden verringert, nicht bekannt sind. Die Tatsache, daß eine Verbindung in Kombination mit einem bestimmten Herbizid als Safener wirkt, läßt daher keine Rückschlüsse darauf zu, ob eine solche Verbindung auch mit anderen Gruppen von Herbiziden Safenerwirkung aufweist. So hat sich bei der Anwendung von Safenern zum Schutz der Nutzpflanzen vor Schädigungen des Herbizids gezeigt, daß die Safener in vielen Fällen immer noch gewisse Nachteile aufweisen können. Dazu zählen:
- der Safener vermindert die Wirkung der Herbizide gegen die Schadpflanzen,
- die nutzpflanzenschützenden Eigenschaften sind nicht ausreichend,
- in Kombination mit einem gegebenen Herbizid ist das Spektrum der Nutzpflanzen, in denen der Safener/Herbizid-Einsatz erfolgen soll, nicht ausreichend groß,
- ein gegebener Safener ist nicht mit einer ausreichend großen Anzahl von Herbiziden kombinierbar.

Aufgabe der vorliegenden Erfindung war es, neue Kombinationen von Herbiziden aus der Gruppe der HPPD-Inhibitoren mit Safenern bereit zu stellen, die geeignet sind, die Selektivität dieser Herbizide gegenüber wichtigen Kulturpflanzen zu steigern.

Es wurden nun neue Kombinationen von bestimmten Herbiziden aus der Gruppe der HPPD-Inhibitoren, speziell aus der Gruppe der Benzoylpyrazole, die in 3-Position des Benzolyteils ausgewählte Amino-Substituenten tragen, mit einigen Safenem gefunden, die die Selektivität dieser Herbizide gegenüber wichtigen Kulturpflanzen erhöhen.

Gegenstand der Erfindung ist daher ein herbizid wirksames Mittel, enthaltend eine herbizid wirksame Menge einer Komponente A und eine antidotisch wirksame Komponente B, wobei Komponente A eine Verbindung der Formel (I) oder deren Salze darstellt, 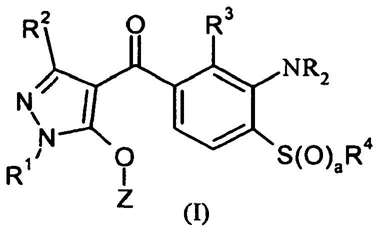 worin die Symbole und Indizes folgende Bedeutungen haben:
- R¹: ist (C₁-C₄)-Alkyl, (C₃-C₄)-Cycloalkyl, (C₂-C₄)-Alkenyl oder (C₂-C₄)-Alkinyl;
- R²: ist Wasserstoff, CH₂OCH₃, (C₁-C₃)-Alkyl oder Cyclopropyl;
- R³: ist Halogen, (C₁-C₄)-Alkyl, (C₃-C₄)-Cycloalkyl, (C₁-C₂)-Alkoxy, CH₂OCH₃ oder CH(CH₃)OCH₃;
- R⁴: ist (C₁-C₄)-Alkyl;
- Z: ist Wasserstoff oder durch a Reste aus der Gruppe Halogen, Cyano, CF₃, Nitro, (C₁-C₂)-Alkyl und (C₁-C₂)-Alkoxy substituiertes Benzyl;
- R: ist Wasserstoff, (C₁-C₄)-Alkyl, (C₃-C₄)-Cycloalkyl, (C₃-C₄)-Alkenyl, (C₃-C₄-Alkinyl), wobei die 4 letztgenannten Substituenten durch v Reste aus der Gruppe Halogen, Cyano, (C₁-C₄)-Alkoxy, (C₃-C₄)-Cycloalkoxy und (C₁-C₃)-Fluoralkoxy substituiert sind, oder durch v Reste aus der Gruppe Halogen, Cyano, Nitro, CF₃, (C₁-C₂)-Alkoxy und (C₁-C₂)-Alkyl substituiertes Benzyl; oder
- NR₂: bedeutet einen 5-, 6- oder 7-gliedrigen gesättigten, teilgesättigten, ungesättigten oder aromatischen Rest enthaltend c Stickstoffatome und t Sauerstoffatome, der durch v Reste aus der Gruppe Halogen, Cyano, (C₁-C₄)-Alkyl, (C₃-C₄)-Cycloalkyl, (C₁-C₃)-Fluoralkyl, (C₁-C₄)-Alkoxy, (C₃-C₄)-Cycloalkoxy, (C₁-C₃)-Fluoralkoxy, (C₁-C₃)-Alkoxymethyl und durch v Reste aus der Gruppe Halogen, Cyano, Nitro, CF₃, (C₁-C₂)-Alkoxy und C₁-C₂)-Alkyl substituiertes Phenyl, substituiert ist;
und Komponente B eine oder mehrere Verbindungen der Formel (II), gegebenenfalls auch in Salzform, darstellt, 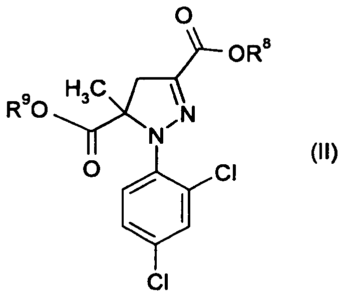 worin die Symbole folgende Bedeutungen haben:
- R⁸, R⁹: sind jeweils unabhängig voneinander Wasserstoff, (C₁-C₄)-Alkyl;
- a: ist 0, 1 oder 2;
- c: ist 1 oder 2;
- t: ist 0 oder 1;
- v: ist 0, 1, 2 oder 3,
einschließlich der Stereoisomeren.

Herbizid wirksame Menge bedeutet im Sinne der Erfindung eine Menge an einem oder mehreren Herbiziden, die geeignet ist, den Pflanzenwuchs negativ zu beinflussen.

Antidotisch wirksame Menge bedeutet im Sinne der Erfindung eine Menge an einem oder mehreren Safenern, die geeignet ist, der phytotoxischen Wirkung eines Herbizids oder Herbizidgemisches an einer Nutzpflanze zumindest teilweise entgegenzuwirken.

Sofern es im einzelnen nicht anders definiert wird, gelten für die Reste in den Formeln zu (I) und (II) und nachfolgenden Formeln die folgenden Definitionen.

Die Reste Alkyl, Alkoxy, Halogenalkyl, Halogenalkoxy und Alkylthio sowie die entsprechenden ungesättigten und/oder substituierten Reste können im Kohlenstoffgerüst jeweils geradkettig oder verzweigt sein. Alkylreste, auch in den zusammengesetzten Bedeutungen wie Alkoxy, Halogenalkyl usw. haben vorzugsweise 1 bis 4 C-Atome und bedeuten z.B. Methyl, Ethyl, n- oder i-Propyl, n-, i-, t- oder 2-Butyl. "(C₁-C₄)-Alkyl" ist die Kurzschreibweise für Alkyl mit 1 bis 4 C-Atomen; entsprechendes gilt für andere allgemeine Restedefinitionen mit in Klammern angegebenen Bereichen für die mögliche Anzahl von C-Atomen.

Halogen bedeutet Fluor, Chlor, Brom oder lod. Halogenalkyl bedeutet durch Halogen, vorzugsweise durch Fluor, Chlor und/oder Brom, insbesondere durch Fluor oder Chlor, teilweise oder vollständig substituiertes Alkyl, z.B. CF₃, CHF₂, CH₂F, CF₂CF₃, CH₂FCCIFH, CCl₃, CHCl₂, CH₂CH₂Cl. Halogenalkoxy ist z.B. OCF₃, OCHF₂, OCH₂F, OCF₂CF₃, OCH₂CF₃ und OCH₂CH₂Cl. Entsprechendes gilt für sonstige durch Halogen substituierte Reste.

Beispiele für 5-, 6- oder 7-gliedrige gesättigte, teilgesättigte, ungesättigte oder aromatische Reste, die durch NR₂ gebildet werden, sind 1-Pyrrolidinyl, 2-Pyrrolidinyl, 3-Pyrrolidinyl, 3-Isoxazoldinyl, 4-Isoxazolidinyl, 5-Isoxoazolidinyl, 1-Pyrazolidinyl, 3-Pyrazolidinyl, 4-Pyrazolidinyl, 5-Pyrazolidinyl, 2-Oxazolidinyl, 4-Oxazolidinyl, 5-Oxazolidinyl, 2-Imidazolidinyl, 4-Imidazolidinyl, 1,2,4-Oxa-diazolidin-3-yl, 1,2,4-Oxadiazolidin-5-yl, 1,3,4-Oxadiazolidin-2-yl, 2,3-Dihydropyrrol-2-yl, 2,3-Dihydropyrrol-3-yl, 2,3-Dihydropyrrol-4-yl, 2,3-Dihydropyrrol-5-yl, 2,5-Dihydropyrrol-2-yl, 2,5-Dihydropyrrol-3-yl, 2,3-Dihydroisoxazol-3-yl, 2,3-Dihydroisoxazol-4-yl, 2,3-Dihydroisoxazol-5-yl, 4,5-Dihydroisoxazol-3-yl, 4,5-Dihydro-isoxazol-4-yl, 4,5-Dihydroisoxazol-5-yl, 2,3-Dihydroisothiazol-3-yl, 2,3-Dihydroisothiazol-4-yl, 2,3-Dihydroisothiazol-5-yl, 4,5-Dihydroisothiazol-3-yl, 4,5-Dihydroisothiazol-4-yl, 4,5-Dihydroisothiazol-5-yl, 2,5-Dihydroisothiazol-3-yl, 2,5-Dihydroisothiazol-4-yl, 2,5-Dihydroisothiazol-5-yl, 2,3-Dihydrooxazol-3-yl, 2,3-Dihydrooxazol-4-yl, 2,3-Dihydro-oxazol-5-yl, 4,5-Dihydrooxazol-3-yl, 4,5-Dihydrooxazol-4-yl, 4,5-Dihydrooxazol-5-yl, 2,5-Dihydrooxazol-3-yl, 2,5-Dihydrooxazol-4-yl, 2,5-Dihydrooxazol-5-yl, 2,3-Dihydroimidazol-2-yl, 2,3-Dihydroimidazol-4-yl, 2,3-Dihydroimidazol-5-yl, 4,5-Dihydroimidazol-2-yl, 4,5-Dihydroimidazol-4-yl, 4,5-Dihydroimidazol-5-yl, 2,5-Dihydroimidazol-2-yl, 2,5-Dihydroimidazol-4-yl, 2,5-Dihydroimidazol-5-yl, 1-Morpholinyl, 2-Morpholinyl, 3-Morpholinyl, 1-Piperidinyl, 2-Piperidinyl, 3-Piperidinyl, 4-Piperidinyl, 3-Tetrahydropyridazinyl, 4-Tetrahydro-pyridazinyl, 2-Tetrahydropyrimidinyl, 4-Tetrahydropyrimidinyl, 5-Tetrahydro-pyrimidinyl, 2-Tetrahydropyrazinyl, 1,3-Dihydrooxazin-2-yl, 3,4,5,6-Tetrahydropyridin-2-yl, 1,3-Dihydrooxazin-2-yl, 2-Pyrrolyl, 3-Pyrrolyl, 1-Pyrazolyl, 3-Pyrazolyl, 4-Pyrazolyl, 5-Pyrazolyl, 2-Imidazolyl, 4-Imidazolyl, 1-Pyrrolyl, 2-Pyrrolyl, 3-Pyrrolyl, 3-Isoxazolyl, 4-Isoxazolyl, 5-Isoxazolyl, 3-Pyrazolyl, 4-Pyrazolyl, 5-Pyrazolyl, 2-Oxazolyl, 4-Oxazolyl, 5-Oxazolyl, 2-Imidazolyl, 1,2,4-Oxadiazol-3-yl, 1,2,4-Oxadiazol-5-yl, 1,3,4-Oxadiazol-2-yl, 2-Pyridinyl, 3-Pyridinyl, 4-Pyridinyl, 3-Pyridazinyl, 4-Pyridazinyl, 2-Pyrimdinyl, 4-Pyrimidinyl, 5-Pyrimidinyl und 2-Pyrazinyl.

Je nach Art ihrer Substituenten können die Verbindungen der Formeln (I) bis (V) in Form ihrer Salze vorliegen. Solche Salze sind beispielsweise Hydrochloride, Ammonium-, Natrium-, Kalium-Salze.

Von den Formeln (I) und (II) umfaßt sind auch alle Stereoisomeren, welche die gleiche topologische Verknüpfung der Atome aufweisen, und deren Gemische. Solche Verbindungen enthalten ein oder mehrere asymmetrische C-Atome oder auch Doppelbindungen, die in den allgemeinen Formeln nicht gesondert angegeben sind. Die durch ihre spezifische Raumform definierten möglichen Stereoisomeren, wie Enantiomere, Diastereomere, Z- und E-Isomere, können nach üblichen Methoden aus Gemischen der Stereoisomeren erhalten oder auch durch stereoselektive Reaktionen in Kombination mit dem Einsatz von stereochemisch reinen Ausgangsstoffen hergestellt werden.

Als herbizide Wirkstoffe eignen sich erfindungsgemäß solche Verbindungen der allgemeinen Formel (I), die allein nicht oder nicht optimal in Nutzpflanzenkulturen wie Getreidekulturen, Reis oder Mais eingesetzt werden können, weil sie die Kulturpflanzen zu stark schädigen.

Herbizide der allgemeinen Formel (I) sind z.B. aus US 5,824,802 und WO-A 96/26206 bekannt.

Die zitierten Schriften enthalten ausführliche Angaben zu Herstellungsverfahren und Ausgangsmaterialien. Auf diese Schriften wird ausdrücklich Bezug genommen: Sie gelten durch Zitat als Bestandteil dieser Beschreibung.

Die Verbindungen der Formel (II) sind z.B. aus WO 91/07874 und der dort zitierten Literatur bekannt oder können nach oder analog den dort beschriebenen Verfahren hergestellt werden.

Die zitierten Schriften enthalten ausführliche Angaben zu Herstellungsverfahren und Ausgangsmaterialien. Auf diese Schriften wird ausdrücklich Bezug genommen, sie gelten durch Zitat als Bestandteil dieser Beschreibung.

Im Rahmen der vorliegenden Anmeldung sind die Begriffe "Herbizide Mittel" und "Herbizid-Safener-Kombinationen" als gleichbedeutend zu verstehen.

Von besonderem Interesse sind herbizide Mittel enthaltend als Komponente A Verbindungen der Formel (I), worin die Symbole und Indizes folgende Bedeutungen haben:
- R¹: ist (C₁-C₄)-Alkyl;
- R²: ist Wasserstoff oder (C₁-C₃)-Alkyl;
- R³: ist Halogen, (C₁-C₃)-Alkyl, vorzugsweise Chlor oder Methyl;
- R⁴: ist (C₁-C₄)-Alkyl;
- Z: ist Wasserstoff oder Benzyl;
- R: ist Wasserstoff oder durch v (C₁-C₄)-Alkoxy Reste substituiertes (C₁-C₄)-Alkyl; oder
- NR₂: bedeutet einen 5-, 6- oder 7-gliedrigen gesättigten, teilgesättigten, ungesättigten oder aromatischen Rest enthaltend c Stickstoffatome und t Sauerstoffatome, der durch v Reste aus der Gruppe Halogen, Cyano, (C₁-C₄)-Alkyl, (C₃-C₄)-Cycloalkyl, (C₁-C₃)-Fluoralkyl, (C₁-C₄)-Alkoxy, (C₃-C₄)-Cycloalkoxy, (C₁-C₃)-Fluoralkoxy und (C₁-C₃)-Alkoxymethyl substituiert ist,
und die anderen Substituenten und Indices jeweils die weiter oben genannten Bedeutungen haben.

Bevorzugt sind herbizide Mittel enthaltend als Komponente B eine oder mehrere Verbindungen der Formel (II), worin R⁸ und R⁹ unabhängig voneinander Wasserstoff oder (C₁-C₂)-Alkyl bedeuten, und die anderen Substituenten und Indices jeweils die weiter oben genannten Bedeutungen haben.

Besonders bevorzugt sind herbizide Mittel enthaltend als Komponente A eine oder mehrere Verbindungen (I-1) bis (I-13) gemäß Tabelle 1.

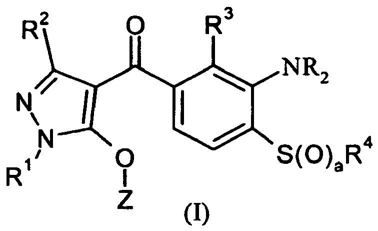

**Tabelle 1**

| **Nr.** | **R¹** | **R²** | **R³** | **R⁴** | **NR₂** | **Z** | **a** |
|---|---|---|---|---|---|---|---|
| I-1 | Et | Me | Me | Me | NHCH₂CH₂OMe | H | 2 |
| I-2 | Me | Me | Me | Me | NHCH₂CH₂OMe | H | 2 |
| I-3 | Me | c-Pr | Me | Me | NHCH₂CH₂OMe | H | 2 |
| I-4 | Et | H | Me | Me | NHCH₂CH₂OMe | H | 2 |
| I-5 | Et | H | Me | Me | NMe₂ | H | 2 |
| I-6 | Me | H | Cl | Me | NMe₂ | H | 2 |
| I-7 | Et | H | Cl | Me | NHCH₂CH=CH₂ | H | 2 |
| I-8 | Et | H | Me | Me | 1-Morpholino | H | 2 |
| I-9 | i-Pr | H | Cl | Me | 1-Morpholino | H | 2 |
| I-10 | Me | c-Pr | Cl | Me | 1-Morpholino | H | 2 |
| I-11 | Et | Me | Cl | Me | 1-Pyrazolyl | H | 2 |
| I-12 | Me | Me | Cl | Me | 1-Pyrazolyl | H | 2 |
| I-13 | Me | Me | Me | Me | NHCH₂CH₂OMe | Bn | 2 |
| I-14 | Et | H | Cl | Me | 1-Pyrazolyl | H | 2 |

Besonders bevorzugt sind auch herbizide Mittel enthaltend als Komponente B eine oder mehrere Verbindungen (II-1) bis (II-3) gemäß Tabelle 2.

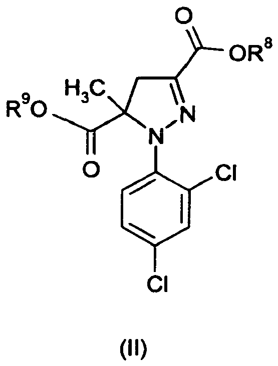

**Tabelle 2**

| **Nr.** | **R⁸** | **R⁹** |
|---|---|---|
| II-1 | H | H |
| II-2 | Me | Me |
| II-3 | Et | Et |

In Tabellen 1 und 2 haben die dort verwendeten Abkürzungen folgende Bedeutungen:

| | | | | | |
|---|---|---|---|---|---|
| bon | = Benzyl | Et | = Ethyl | Me | = Methyl |
| c-Pr | = cyclo-Propyl | i-Pr | = iso-Propyl | | |

Ganz besonders bevorzugt sind herbizide Mittel enthaltend Komponenten A und B in folgenden Kombinationen:

| | | | | |
|---|---|---|---|---|
| (I-1) + (II-1), | (I-2) + (II-1). | (I-3) + (II-1), | (I-4) + (II-1), | (I-5) + (II-1), |
| (I-16 + (II-1), | (I-7) + (II-1), | (I-8) + (II-1), | (I-9) + (II-1), | (I-10) + (II-1), |
| (I-10) + (II-1), | (I-12) + (II-1), | (I-13) + (II-1), | (I-14) + (II-1); | |
| | | | | |
| (I-1) + (II-2), | (I-2) + (II-2), | (I-3) + (II-2), | (I-4) + (II-2), | (I-5) + (II-2), |
| (I-16 + (II-2), | (I-7) + (II-2), | (I-8) + (II-2), | (I-9) + (II-2), | (I-10) + (II-2). |
| (I-10) + (II-2), | (I-12) + (II-2), | (I-13) + (II-2), | (I-14) + (II-2); | |
| | | | | |
| (I-1) + (11-3), | (I-2) + (II-3), | (I-3) + (II-3), | (I-4) + (II-3), | (I-5) + (II-3), |
| (I-16 + (II-3), | (I-7) + (II-3), | (I-8) + (II-3), | (I-9) + (II-3), | (I-10) + (II-3), |
| (I-10) + (II-3), | (I-12) + (II-3), | (I-13) + (II-3), | (I-14) + (II-3). | |

Die hier als Safener (Antidote) genannten Verbindungen, reduzieren oder unter binden phytotoxische Effekte, die beim Einsatz der herbiziden Wirkstoffe der Formel (I) in Nutzpflanzenkulturen auftreten können, ohne die Wirksamkeit dieser herbiziden Wirkstoffe gegen Schadpflanzen wesentlich zu beeinträchtigen. Hierdurch kann das Einsatzgebiet herkömmlicher Pflanzenschutzmittel ganz erheblich erweitert und z.B. auf Kulturen wie Weizen, Gerste, Reis und Mais ausgedehnt werden, in denen bisher ein Einsatz der Herbizide nicht möglich oder nur beschränkt, das heißt, in niedrigen Dosierungen mit wenig Breitenwirkung möglich war.

Die herbiziden Wirkstoffe und die erwähnten Safener können zusammen (als fertige Formulierung oder im Tank-Mix-Verfahren) oder in beliebiger Reihenfolge nacheinander ausgebracht werden. Das Gewichtsverhältnis Safener zu herbizider Wirkstoff kann innerhalb weiter Grenzen variieren und ist vorzugsweise im Bereich von 1:100 bis 100:1, insbesondere von 1:10 bis 10:1. Die jeweils optimalen Mengen an herbizidem Wirkstoff und Safener sind vom Typ des verwendeten herbiziden Wirkstoffs oder vom verwendeten Safener sowie von der Art des zu behandelnden Pflanzenbestandes abhängig und lassen sich von Fall zu Fall durch einfache, routinemäßige Vorversuche ermitteln.

Haupteinsatzgebiete für die Anwendung der erfindungsgemäßen Kombinationen sind vor allem Mais und Getreidekulturen wie z.B. Weizen, Roggen, Gerste, Hafer, Reis, Sorghum, aber auch Baumwolle und Sojabohne, vorzugsweise Getreide, Reis und Mais.

Die erfindungsgemäß eingesetzten Safener können je nach ihren Eigenschaften zur Vorbehandlung des Saatgutes der Kulturpflanze (Beizung der Samen) verwendet werden oder vor der Saat in die Saatfurchen eingebracht oder zusammen mit dem Herbizid vor oder nach dem Auflaufen der Pflanzen angewendet werden. Vorauflaufbehandlung schließt sowohl die Behandlung der Anbaufläche vor der Aussaat als auch die Behandlung der angesäten, aber noch nicht bewachsenen Anbauflächen ein. Bevorzugt ist die gemeinsame Anwendung mit dem Herbizid. Hierzu können Tankmischungen oder Fertigformulierungen eingesetzt werden.

Die benötigten Aufwandmengen der Safener können je nach Indikation und verwendetem herbiziden Wirkstoff innerhalb weiter Grenzen schwanken und sind in der Regel im Bereich von 0,001 bis 5 kg, vorzugsweise 0,005 bis 0,5 kg Wirkstoff je Hektar.

Gegenstand der vorliegenden Erfindung ist deshalb auch ein Verfahren zum Schutz von Kulturpflanzen vor phytotoxischen Nebenwirkungen von Herbiziden der Formel (I), das dadurch gekennzeichnet ist, daß eine antidotisch wirksame Menge einer Verbindung der Formel (II) vor, nach oder gleichzeitig mit dem herbiziden Wirkstoff A der Formel (I) auf die Pflanzen, Pflanzensamen oder die Anbaufläche appliziert wird.

Die erfindungsgemäße Herbizid-Safener Kombination kann auch zur Bekämpfung von Schadpflanzen in Kulturen von bekannten oder noch zu entwickelnden gentechnisch veränderten Pflanzen eingesetzt werden. Die transgenen Pflanzen zeichnen sich in der Regel durch besondere vorteilhafte Eigenschaften aus, beispielsweise durch Resistenzen gegenüber bestimmten Pflanzenschutzmitteln, Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Emteguts bekannt.

Bevorzugt ist die Anwendung der erfindungsgemäßen Kombinationen in wirtschaftlich bedeutenden transgenen Kulturen von Nutz-und Zierpflanzen, z. B. von Getreide wie Weizen, Gerste, Roggen, Hafer, Hirse, Reis, Maniok und Mais oder auch Kulturen von Zuckerrübe, Baumwolle, Soja, Raps, Kartoffel, Tomate, Erbse und anderen Gemüsesorten.

Bei der Anwendung der erfindungsgemäßen Kombinationen in transgenen Kulturen treten neben den in anderen Kulturen zu beobachtenden Wirkungen gegenüber Schadpflanzen oftmals Wirkungen auf, die für die Applikation in der jeweiligen transgenen Kultur spezifisch sind, z.B. ein verändertes oder speziell erweitertes Unkrautspektrum, das bekämpft werden kann, veränderte Aufwandmengen, die für die Applikation eingesetzt werden können, vorzugsweise gute Kombinierbarkeit mit den Herbiziden, gegenüber denen die transgene Kultur resistent ist, sowie Beeinflussung von Wuchs und Ertrag der transgenen Kulturpflanzen.

Gegenstand der Erfindung ist deshalb auch die Verwendung der erfindungsgemäßen Kombination zur Bekämpfung von Schadpflanzen in transgenen Kulturpflanzen.

Die Safener der Formel (II) und deren Kombinationen mit einem oder mehreren der genannten herbiziden Wirkstoffe der Formel (I) können auf verschiedene Art formuliert werden, je nachdem welche biologischen und/oder chemischphysikalischen Parameter vorgegeben sind. Als Formulierungsmöglichkeiten kommen beispielsweise in Frage:
Spritzpulver (WP), emulgierbare Konzentrate (EC), wasserlösliche Pulver (SP), wasserlösliche Konzentrate (SL), konzentrierte Emulsionen (BW) wie Öl-in-Wasser und Wasser-in-Öl-Emulsionen, versprühbare Lösungen oder Emulsionen,
Kapselsuspensionen (CS), Dispersionen auf Öl- oder Wasserbasis (SC), Suspoemulsionen, Suspensionskonzentrate, Stäubemittel (DP), ölmischbare Lösungen (OL), Beizmittel, Granulate (GR) in Form von Mikro-, Sprüh-, Aufzugs- und
Adsorptionsgranulaten, Granulate für die Boden- bzw. Streuapplikation, wasserlösliche Granulate (SG), wasserdispergierbare Granulate (WG), ULV-Formulierungen, Mikrokapseln und Wachse.

Diese einzelnen Formulierungstypen sind im Prinzip bekannt und beispielsweise beschrieben in: Winnacker-Küchler, "Chemische Technologie" Band 7, C. Hauser Verlag München, 4. Aufl. 1986; Wade van Valkenburg, "Pesticide Formulations", Marcel Dekker N.Y., 1973; K. Martens, "Spray Drying Handbook", 3rd Ed. 1979, G. Goodwin Ltd. London.

Die gegebenenfalls notwendigen Formulierungshilfsmittel, wie Inertmaterialien, Tenside, Lösungsmittel und weitere Zusatzstoffe, sind ebenfalls bekannt und beispielsweise beschrieben in: Watkins, "Handbook of Insecticide Dust Diluents and Carriers", 2nd Ed., Darland Books, Caldwell N.J., H.v. Olphen, "Introduction to Clay Colloid Chemistry"; 2nd Ed., J. Wiley & Sons, N.Y.; C. Marsden, "Solvents Guide"; 2nd Ed., Interscience, N.Y. 1963; McCutcheon's "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1976; Winnacker-Küchler, "Chemische Technologie", Band 7, C. Hauser Verlag München, 4. Aufl. 1986.

Auf der Basis dieser Formulierungen lassen sich auch Kombinationen mit anderen als Pflanzenschutzmitteln wirksamen Stoffen, wie Insektiziden, Akariziden, Herbiziden, Fungiziden, sowie mit Safenern, Düngemitteln und/oder Wachstumsregulatoren herstellen, z.B. in Form einer Fertigformulierung oder als Tankmix.

Spritzpulver sind in Wasser gleichmäßig dispergierbare Präparate, die neben dem Wirkstoff außer einem Verdünnungs- oder Inertstoff noch Tenside ionischer und/oder nichtionischer Art (Netzmittel, Dispergiermittel), z.B. polyoxyethylierte Alkylphenole, polyoxethylierte Fettalkohole, polyoxethylierte Fettamine, Fettalkoholpolyglykolethersulfate, Alkansulfonate, Alkylbenzolsulfonate, ligninsulfonsaures Natrium, 2,2'-dinaphthylmethan-6,6'-disulfonsaures Natrium, dibutylnaphthalin-sulfonsaures Natrium oder auch oleoylmethyltaurinsaures Natrium enthalten. Zur Herstellung der Spritzpulver werden die herbiziden Wirkstoffe beispielsweise in üblichen Apparaturen, wie Hammermühlen, Gebläsemühlen und Luftstrahlmühlen, feingemahlen und gleichzeitig oder anschließend mit den Formulierungshilfsmitteln vermischt.

Emulgierbare Konzentrate werden z.B. durch Auflösen des Wirkstoffes in einem organischen Lösungsmittel, wie Butanol, Cyclohexanon, DMF oder auch höhersiedende Kohlenwasserstoffe wie gesättigte oder ungesättigte Aliphaten oder Alicyclen, Aromaten oder Mischungen der organischen Lösungsmittel unter Zusatz von einem oder mehreren Tensiden ionischer und/oder nichtionischer Art (Emulgatoren) hergestellt. Als Emulgatoren können beispielsweise verwendet werden: Alkylarylsulfonsaure Calzium-Salze, wie Ca-dodecylbenzolsulfonat, oder nichtionische Emulgatoren, wie Fettsäurepolyglykolester, Alkylarylpolyglykolether, Fettalkoholpolyglykolether, Propylenoxid-Ethylenoxid-Kondensationsprodukte, Alkylpolyether, Sorbitanester, wie Sorbitanfettsäureester, oder Polyoxyethylensorbitanester, wie Polyoxyethylensorbitanfettsäureester. Stäubemittel erhält man im allgemeinen durch Vermahlen des Wirkstoffes mit fein verteilten festen Stoffen, z.B. Talkum, natürlichen Tonen, wie Kaolin, Bentonit und Pyrophyllit, oder Diatomeenerde.

Suspensionskonzentrate können auf Wasser- oder Ölbasis sein. Sie können beispielsweise durch Naß-Vermahlung mittels handelsüblicher Perlmühlen und gegebenenfalls Zusatz von Tensiden, wie sie z.B. bei den anderen Formulierungstypen bereits aufgeführt sind, hergestellt werden.

Emulsionen, z.B. Öl-in-Wasser-Emulsionen (EW), lassen sich beispielsweise mittels Rührern, Kolloidmühlen und/oder statischen Mischern unter Verwendung von wäßrigen organischen Lösungsmitteln und gegebenenfalls Tensiden, wie sie z.B. bei den anderen Formulierungstypen bereits aufgeführt sind, herstellen.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen, wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden. Wasserdispergierbare Granulate werden in der Regel nach den üblichen Verfahren, wie Sprühtrocknung, Wirbelbett-Granulierung, Teller-Granulierung, Mischung mit Hochgeschwindigkeitsmischern und Extrusion ohne festes Inertmaterial, hergestellt.

Zur Herstellung von Teller-, Fließbett-, Extruder- und Sprühgranulaten siehe z.B. in "Spray-Drying Handbook" 3rd ed. 1979, G. Goodwin Ltd., London; J.E. Browning, "Agglomeration", Chemical and Engineering 1967, Seiten 147 ff; "Perry's Chemical Engineer's Handbook", 5th Ed., McGraw-Hill, New York 1973, S. 8-57.

Für weitere Einzelheiten zur Formulierung von Pflanzenschutzmitteln siehe z.B. G.C. Klingman, "Weed Control as a Science", John Wiley and Sons, Inc., New York, 1961, Seiten 81-96 und J.D. Freyer, S.A. Evans, "Weed Control Handbook", 5th Ed., Blackwell Scientific Publications, Oxford, 1968, Seiten 101-103.

Die agrochemischen Zubereitungen enthalten in der Regel 0,1 bis 99 Gew.-%, insbesondere 0,1 bis 95 Gew.-%, Wirkstoffe der Formel (II) oder des Herbizid/Antidot-Wirkstoffgemischs (I) und (II) und 1 bis 99,9 Gew.%, insbesondere 5 bis 99,8 Gew.-%, eines festen oder flüssigen Zusatzstoffes und 0 bis 25 Gew.-%, insbesondere 0,1 bis 25 Gew.-% eines Tensides.

In Spritzpulvern beträgt die Wirkstoffkonzentration z.B. etwa 10 bis 90 Gew.%, der Rest zu 100 Gew.-% besteht aus üblichen Formulierungsbestandteilen. Bei emulgierbaren Konzentraten beträgt die Konzentration etwa 1 bis 80 Gew.-%. Staubförmige Formulierungen enthalten etwa 1 bis 20 Gew.% an Wirkstoffen, versprühbare Lösungen etwa 0,2 bis 20 Gew.-% Wirkstoffe. Bei Granulaten, wie wasserdispergierbaren Granulaten, hängt der Wirkstoffgehalt zum Teil davon ab, ob die wirksame Verbindung flüssig oder fest vorliegt. In der Regel liegt der Gehalt bei den in Wasser dispergierbaren Granulaten zwischen 10 und 90 Gew.-%.

Daneben enthalten die genannten Wirkstofformulierungen gegebenenfalls die jeweils üblichen Haft-, Netz-, Dispergier-, Emulgier-, Penetrations-, Konservierungs-, Frostschutz- und Lösungsmittel, Füll-, Träger und Farbstoffe, Entschäumer, Verdunstungshemmer und den pH-Wert und die Viskosität beeinflussende Mittel.

Mit den äußeren Bedingungen wie Temperatur, Feuchtigkeit, der Art des verwendeten Herbizids, u.a. variiert die erforderliche Aufwandmenge der Herbizide der Formel (I). Sie kann innerhalb weiter Grenzen variiert werden, z.B. zwischen 0,001 und 10,0 kg/ha oder mehr Aktivsubstanz, vorzugsweise liegt sie jedoch zwischen 0,005 und 5 kg/ha.

Folgende Beispiele dienen zur Erläuterung der Erfindung:

### A. Formulierungsbeispiele

a) Ein Staubmittel wird erhalten, indem man 10 Gew.-Teile eines Wirkstoffgemischs aus einem herbiziden Wirkstoff der Formel (I) und einem Safener der Formel (II) und 90 Gew.-Teile Talkum als Inertstoff mischt und in einer Schlagmühle zerkleinert.
b) Ein in Wasser leicht dispergierbares, benetzbares Pulver wird erhalten, indem man 25 Gewichtsteile eines Wirkstoffgemischs aus einem herbiziden Wirkstoff der Formel (I) und einem Safener der Formel (II), 64 Gewichtsteile kaolinhaltigen Quarz als Inertstoff, 10 Gewichts-teile ligninsulfonsaures Kalium und 1 Gew.-Teil oleoylmethyltaurinsaures Natrium als Netz- und Dispergiermittel mischt und in einer Stiftmühle mahlt.
b) Ein in Wasser leicht dispergierbares Dispersionskonzentrat wird erhalten, indem man 20 Gewichtsteile eines Wirkstoffgemischs aus einem herbiziden Wirkstoff der Formel (I) und einem Safener der Formel (II), 6 Gew.-Teilen Alkylphenolpolyglykolether (®Triton X 207), 3 Gew.-Teilen Isotridecanolpolyglykolether (8 EO) und 71 Gew.- Teilen paraffinischem Mineralöl (Siedebereich z.B. ca. 255 bis über 277 C) mischt und in einer Reibkugelmühle auf eine Feinheit von unter 5 Mikron vermahlt.
d) Ein emulgierbares Konzentrat wird erhalten aus 15 Gew.-Teilen eines Wirkstoffgemischs aus einem herbiziden Wirkstoff der Formel (I) und einem Safener der Formel (II), 75 Gew.Teilen Cyclohexanon als Lösemittel und 10 Gew.-Teilen oxethyliertes Nonylphenol als Emulgator.
e) Ein in Wasser dispergierbares Granulat wird erhalten, indem man
   - 75 Gew.-Teile: eines Wirkstoffgemischs aus einem herbiziden Wirkstoff der Formel (I) und einem Safener der Formel (II)
   - 10 ": ligninsulfonsaures Calcium,
   - 5 ": Natriumlaurylsulfat,
   - 3 ": Polyvinylalkohol und
   - 7 ": Kaolin
   mischt, auf einer Stiftmühle mahlt und das Pulver in einem Wirbelbett durch Aufsprühen von Wasser als Granulierflüssigkeit granuliert.
f) Ein in Wasser dispergierbares Granulat wird auch erhalten, indem man
   - 25 Gew.-Teil(e): eines Wirkstoffgemischs aus einem herbiziden Wirkstoff der Formel (I) und einem Safener der Formel (II)
   - 5 ": 2,2'-dinaphthylmethan-6,6'-disulfonsaures Natrium,
   - 2 ": oleoylmethyltaurinsaures Natrium,
   - 1 ": Polyvinylalkohol,
   - 17 ": Calciumcarbonat und
   - 50 ": Wasser
auf einer Kolloidmühle homogensiert und vorzerkleinert, anschließend auf einer Perlmühle mahlt und die so erhaltene Suspension in einem Sprühturm mittels einer Einstoffdüse zerstäubt und trocknet.

### B. Biologische Beispiele

### B.1 Versuche im Nachauflauf:

Samen von Nutzpflanzen werden in Töpfen von 9 bis 13 cm Durchmesser in sandiger Lehmerde ausgelegt und mit Erde bedeckt. Im Dreiblattstadium, d.h. etwa drei Wochen nach Beinn der Aufzucht werden die Versuchspflanzen mit den als emulgierbare Konzentrate oder Stäubemittel formulierten Herbizide (Aufwandmenge 200 g Aktivsubstanz pro Hektar) in Form wäßriger Dispersionen oder Suspensionen bzw. Emulsionen behandelt mit einer Wasseraufwandmenge von umgerechnet 300 bis 800 1/ha in unterschiedlichen Dosierungen auf die grünen Pflanzenteile gesprüht. Die Töpfe werden zur weiteren Kultivierung der Pflanzen im Gewächshaus unter optimalen Bedingungen gehalten. Die optische Bewertung der Schäden an Nutz-und Schadpflanzen erfolgt 2-3 Wochen nach der Behandlung.

Die Versuchsergebnisse sind in den Tabellen 6, 7 und 8 zusammengestellt. Darin ist die Verringerung der phytotoxischen Wirkung in Prozent der erfindungsgemäßen Herbizid-Safener-Kombinationen gegenüber der alleinigen Herbizid-Anwendung angegeben. Je nach Aufwandmenge, Art der Nutzpflanze und Art des erfindungsgemäßen Mittels werden die Schäden um bis zu 100 % gegenüber der alleinigen Verwendung des Herbizids gemindert. Die Dosierung ist in Gramm Aktivsubstanz pro Hektar (g a.i./ha) angegeben.

**Tabelle 6**

| **Verbindung** | **Dosierung [g/ha]** | **Minderung der Schäden in Weizen (Sorte "Rektor") gegenüber alleiniger Anwendung des Herbizids** |
|---|---|---|
| (I-2) + (II-3) | 200 + 200 | - 77% |

**Tabelle 7**

| **Verbindung** | **Dosierung [g/ha]** | **Minderung der Schäden in Weizen (Sorte "Orjaune") gegenüber alleiniger Anwendung des Herbizids** |
|---|---|---|
| (I-2) + (II-3) | 200 + 200 | -92% |

**Tabelle 8**

| **Verbindung** | **Dosierung [g/ha]** | **Minderung der Schäden in Gerste (Sorte "Duet") gegenüber alleiniger Anwendung des Herbizids** |
|---|---|---|
| (I-2) + (II-3) | 200 + 80 | -100% |

### B.2 Versuche im Nachauflauf (Freilandversuch)

Samen von Nutzpflanzen werden im Freiland in Erde ausgelegt und mit Erde bedeckt. Im 3- bis 5-Blattstadium werden die Pflanzen mit den als emulgierbare Konzentrate oder Stäubemittel formulierten Herbiziden und zu Vergleichszwecken mit Herbiziden und Safenem in Form wäßriger Dispersionen oder Suspensionen bzw. Emulsionen mit einer Wasseraufwandmenge von umgerechnet 300 bis 800 l/ha in unterschiedlichen Dosierungen behandelt. Die optische Bewertung der Schäden an den Nutzpflanzen erfolgt 7 Tage nach der Behandlung.

Die Versuchsergebnisse sind in Tabelle 9 zusammengestellt. Darin ist die Verringerung der phytotoxischen Wirkung in Prozent der erfindungsgemäßen Herbizid-Safener-Kombinationen gegenüber der alleinigen Herbizid-Anwendung angegeben. Je nach Aufwandmenge, Art der Nutzpflanze und Art des erfindungsgemäßen Mittels werden die Schäden um bis 60 % gegenüber der alleinigen Verwendung des Herbizid gemindert. Die Dosierung ist in Gramm Aktivsubstanz pro Hektar (g a.i./ha) angegeben.

**Tabelle 9**

| **Verbindung** | **Dosierung [g/ha]** | **Minderung der Schäden in Sommerweizen gegenüber alleiniger Anwendung des Herbizids** |
|---|---|---|
| (I-2) + (II-3) | 150 + 75 | -57% |

## Patentansprüche

1. Herbizides Mittel, enthaltend eine herbizid wirksame Menge einer Komponente A und eine antidotisch wirksame Komponente B, wobei Komponente A eine Verbindung der Formel (I) oder deren Salze darstellt, 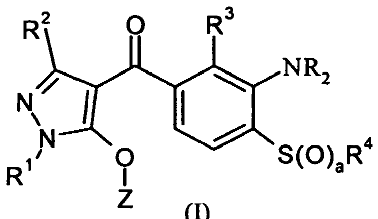 worin die Symbole und Indizes folgende Bedeutungen haben:
R¹ ist (C₁-C₄)-Alkyl, (C₃-C₄)-Cycloalkyl, (C₂-C₄)-Alkenyl oder (C₂-C₄)-Alkinyl;
R² ist Wasserstoff, CH₂OCH₃, (C₁-C₃)-Alkyl oder Cyclopropyl;
R³ ist Halogen, (C₁-C₄)-Alkyl, (C₃-C₄)-Cycloalkyl, (C₁-C₂)-Alkoxy, CH₂OCH₃ oder CH(CH₃)OCH₃;
R⁴ ist (C₁-C₄)-Alkyl;
Z ist Wasserstoff oder durch a Reste aus der Gruppe Halogen, Cyano, CF₃, Nitro, (C₁-C₂)-Alkyl und (C₁-C₂)-Alkoxy substituiertes Benzyl;
R ist Wasserstoff, (C₁-C₄)-Alkyl, (C₃-C₄)-Cycloalkyl, (C₃-C₄)-Alkenyl, (C₃-C₄-Alkinyl), wobei die 4 letztgenannten Substituenten durch v Reste aus der Gruppe Halogen, Cyano, (C₁-C₄)-Alkoxy, (C₃-C₄)-Cycloalkoxy und (C₁-C₃)-Fluoralkoxy substituiert sind, oder durch v Reste aus der Gruppe Halogen, Cyano, Nitro, CF₃, (C₁-C₂)-Alkoxy und (C₁-C₂)-Alkyl substituiertes Benzyl; oder
NR₂ bedeutet einen 5-, 6- oder 7-gliedrigen gesättigten, teilgesättigten, ungesättigten oder aromatischen Rest enthaltend c Stickstoffatome und t Sauerstoffatome, der durch v Reste aus der Gruppe Halogen, Cyano, (C₁-C₄)-Alkyl, (C₃-C₄)-Cycloalkyl, (C₁-C₃)-Fluoralkyl, (C₁-C₄)-Alkoxy, (C₃-C₄)-Cycloalkoxy, (C₁-C₃)-Fluoralkoxy, (C₁-C₃)-Alkoxymethyl und durch v Reste aus der Gruppe Halogen, Cyano, Nitro, CF₃, (C₁-C₂)-Alkoxy und C₁-C₂)-Alkyl substituiertes Phenyl, substituiert ist;
und Komponente B eine oder mehrere Verbindungen der Formel (II), gegebenenfalls auch in Salzform, darstellt, 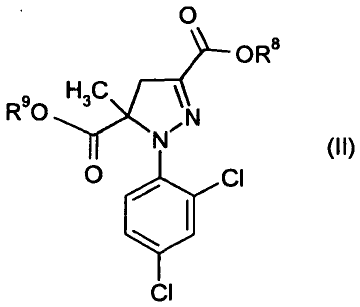 worin die Symbole folgende Bedeutungen haben:
R⁸, R⁹ sind jeweils unabhängig voneinander Wasserstoff, (C₁-C₄)-Alkyl;
a ist 0, 1 oder 2;
c ist 1 oder 2;
t ist 0 oder 1;
v ist 0, 1, 2 oder 3
einschließlich der Stereoisomeren.

2. Herbizides Mittel nach Anspruch 1, enthaltend als Komponente A Verbindungen der Formel (I), worin die Symbole und Indizes folgende Bedeutungen haben:
R¹ ist (C₁-C₄)-Alkyl;
R² ist Wasserstoff oder (C₁-C₃)-Alkyl;
R³ ist Halogen, (C₁-C₃)-Alkyl;
R⁴ ist (C₁-C₄)-Alkyl;
Z ist Wasserstoff oder Benzyl;
R ist Wasserstoff oder durch v (C₁-C₄)-Alkoxy Reste substituiertes (C₁-C₄)-Alkyl; oder
NR₂ bedeutet einen 5-, 6- oder 7-gliedrigen gesättigten, teilgesättigten, ungesättigten oder aromatischen Rest enthaltend c Stickstoffatome und t Sauerstoffatome, der durch v Reste aus der Gruppe Halogen, Cyano, (C₁-C₄)-Alkyl, (C₃-C₄)-Cycloalkyl, (C₁-C₃)-Fluoralkyl, (C₁-C₄)-Alkoxy, (C₃-C₄)-Cycloalkoxy, (C₁-C₃)-Fluoralkoxy und (C₁-C₃)-Alkoxymethyl substituiert ist,
und die anderen Substituenten und Indices jeweils die weiter oben genannten Bedeutungen haben.

3. Herbizides Mittel nach einem oder mehreren der Ansprüche 1 bis 3, enthaltend als Komponente B eine oder mehrere Verbindungen der Formel (II), worin R⁸ und R⁹ unabhängig voneinander Wasserstoff oder (C₁-C₂)-Alkyl bedeuten.

4. Verfahren zur Bekämpfung von Schadpflanzen, worin ein herbizides Mittel gemäß einem oder mehreren der Ansprüche 1 bis 3, gemeinsam oder getrennt im Vorauflauf, Nachauflauf oder im Vor- und Nachauflauf auf die Pflanzen,
Pflanzenteile, Pflanzensamen oder die Fläche, auf der die Pflanzen wachsen, appliziert wird.

5. Verfahren nach Anspruch 4 zur selektiven Bekämpfung von Schadpflanzen in Pflanzenkulturen aus der Gruppe Mais, Weizen, Roggen, Gerste, Hafer, Reis, Sorghum, Baumwolle, Zuckerrohr und Sojabohne.

6. Verfahren nach Anspruch 5 worin die Pflanzenkulturen gentechnisch verändert oder durch Mutationsselektion erhalten sind.

7. Verwendung der nach einem der Ansprüche 1 bis 3 definierten herbiziden Mittel zur Bekämpfung von Schadpflanzen.

## Claims

1. Herbicidal composition comprising a herbicidally active amount of a component A and an antidote-effective component B, where component A is a compound of the formula (I) or its salts, 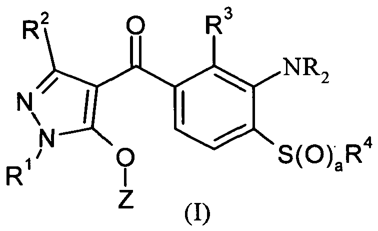 where the symbols and indices have the following meanings:
R¹ is (C₁-C₄) -alkyl, (C₃-C₄) -cycloalkyl, (C₂-C₄) -alkenyl or (C₂-C₄) -alkynyl;
R² is hydrogen, CH₂OCH₃, (C₁-C₃)-alkyl or cyclopropyl;
R³ is halogen, (C₁-C₄)-alkyl, (C₃-C₄) -cycloalkyl, (C₁-C₂) - alkoxy, CH₂OCH₃ or CH (CH₃) OCH₃ ;
R⁴ is (C₁-C₄) -alkyl;
Z is hydrogen, or benzyl which is substituted by a radicals selected from the group consisting of halogen, cyano, CF₃, nitro, (C₁-C₂)-alkyl and (C₁-C₂) -alkoxy;
R is hydrogen, (C₁-C₄)-alkyl, (C₃-C₄) -cycloalkyl, (C₃-C₄)-alkenyl, (C₃-C₄)-alkynyl, the 4 last-mentioned substituents being substituted by v radicals selected from the group consisting of halogen, cyano, (C₁-C₄) -alkoxy, (C₃-C₄) -cycloalkoxy and (C₁-C₃)-fluoroalkoxy, or benzyl which is substituted by v radicals selected from the group consisting of halogen, cyano, nitro, CF₃, (C₁-C₂) -alkoxy and (C₁-C₂) -alkyl; or
NR₂ is a 5-, 6- or 7-membered saturated, partially saturated, unsaturated or aromatic radical comprising c nitrogen atoms and t oxygen atoms, which radical is substituted by v radicals selected from the group consisting of halogen, cyano, (C₁-C₄) -alkyl, (C₃-C₄) -cycloalkyl, (C₁-C₃)-fluoroalkyl, (C₁-C₄)-alkoxy, (C₃-C₄) -cycloalkoxy, (C₁-C₃) - fluoroalkoxy, (C₁-C₃)-alkoxymethyl and by v radicals selected from the group consisting of halogen-, cyano-, nitro-, CF₃-, (C₁-C₂)-alkoxy- and (C₁-C₂)-alkyl-substituted phenyl;
and component B is one or more compounds of the formula (II), if appropriate also in salt form, 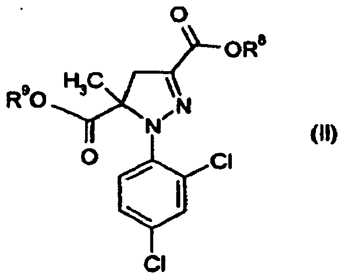 where the symbols have the following meanings:
R⁸, R⁹ are in each case independently of one another hydrogen, (C₁-C₄)-alkyl;
a is 0, 1 or 2;
c is 1 or 2;
t is 0 or 1;
v is 0, 1, 2 or 3
including the stereoisomers.

2. Herbicidal composition according to Claim 1 which comprises, as component A, compounds of the formula (I) in which the symbols and indices have the following meanings:
R¹ is (C₁-C₄)-alkyl;
R² is hydrogen or (C₁-C₃)-alkyl;
R³ is halogen, (C₁-C₃) -alkyl;
R⁴ is (C₁-C₄)-alkyl;
Z is hydrogen or benzyl;
R is hydrogen or (C₁-C₄)-alkyl which is substituted by v (C₁-C₄)-alkoxy radicals, or
NR₂ is a 5-, 6- or 7-membered saturated, partially saturated, unsaturated or aromatic radical comprising c nitrogen atoms and t oxygen atoms, which radical is substituted by v radicals selected from the group consisting of halogen, cyano, (C₁-C₄) -alkyl, (C₃-C₄)-cycloalkyl, (C₁-C₃) -fluoroalkyl, (C₁-C₄) -alkoxy, (C₃-C₄) -cycloalkoxy, (C₁-C₃)-fluoroalkoxy and (C₁-C₃)-alkoxymethyl,
and the other substituents and indices have the meanings mentioned in each case further above.

3. Herbicidal composition according to Claim 1 and/or 2 which comprises, as component B, one or more compounds of the formula (II) where R⁸ and R⁹ independently of one another are hydrogen or (C₁-C₂)-alkyl.

4. Method for controlling harmful plants wherein a herbicidal composition according to one or more of Claims 1 to 3 is applied jointly or separately pre-emergence, post-emergence or pre- and post-emergence to the plants, plant parts, plants seeds or the areas on which the plants grow.

5. Method according to Claim 4 for the selective control of harmful plants in plant crops selected from the group consisting of maize, wheat, rye, barley, oats, rice, sorghum, cotton, sugar cane and soybeans.

6. Method according to Claim 5, wherein the plant crops are genetically modified or obtained by mutation selection.

7. Use of the herbicidal compositions defined in any of Claims 1 to 3 for controlling harmful plants.

## Revendications

1. Composition herbicide, contenant une quantité à effet herbicide d'un composant A et un composant B à effet d'antidote, le composant A représentant un composé de formule (I) ou ses sels, 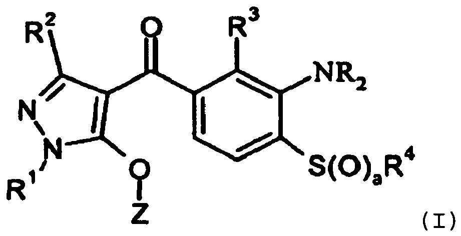 formule dans laquelle les symboles et indices ont les significations suivantes .
R¹ est un groupe alkyle en C₁-C₄, cycloalkyle en C₃-C₄, alcényle en C₂-C₄ ou alcynyle en C₂-C₄ ;
R² est un atome d'hydrogène, CH₂OCH₃, un groupe alkyle en C₁-C₃ ou cyclopropyle ;
R³ est un atome d'halogène, un groupe alkyle en C₁-C₄, cycloalkyle en C₃-C₄, alcoxy en C₁-C₂, CH₂OCH₃ ou CH(CH₃) OCH₃ ;
R⁴ est un groupe alkyle en C₁-C₄ ;
Z est un atome d'hydrogène ou un groupe benzyle substitué par a radicaux choisis dans l'ensemble constitué par des atomes d'halogène, des groupes cyano, CF₃, nitro, alkyle en C₁-C₂ et alcoxy en C₁-C₂ ;
R est un atome d'hydrogène, un groupe alkyle en C₁-C₄, cycloalkyle en C₃-C₄, alcényle en C₃-C₄, alcynyle en C₃-C₄, les 4 substituants nommés en dernier étant substitués par v radicaux choisis dans l'ensemble constitué par des atomes d'halogène, des groupes cyano, alcoxy en C₁-C₄, cycloalcoxy en C₃-C₄ et fluoroalcoxy en C₁-C₃, ou un groupe benzyle substitué par des v radicaux choisis dans l'ensemble constitué par des atomes d'halogène, des groupes cyano, nitro, CF₃, alcoxy en C₁-C₂ et alkyle en C₁-C₂ ; ou
NR₂ représente un radical à 5, 6 ou 7 chaînons, saturé, partiellement saturé, insaturé ou aromatique, contenant c atomes d'azote et t atomes d'oxygène, qui est substitué par v radicaux choisis dans l'ensemble constitué par des atomes d'halogène, des groupes cyano, alkyle en C₁-C₄, cycloalkyle en C₃-C₄, fluoroalkyle en C₁-C₃, alcoxy en C₁-C₄, cycloalcoxy en C₃-C₄, fluoroalcoxy en C₁-C₃, alcoxy(C₁-C₃)méthyle et phényle substitué par par v radicaux choisis dans l'ensemble constitué par des atomes d'halogène, des groupes cyano, nitro, CF₃, alcoxy en C₁-C₂ et alkyle en C₁-C₂ ;
et le composant B représente un ou plusieurs composés de formule (II), éventuellement également sous forme de sel, 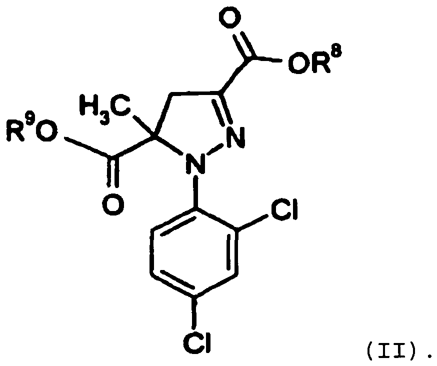 formule dans laquelle les symboles ont les significations suivantes :
R⁸, R⁹ représentent chacun, indépendamment l'un de l'autre, un atome d'hydrogène, un groupe alkyle en C₁-C₄ ;
a est 0, 1 ou 2 ;
c est 1 ou 2 ;
t est 0 ou 1 ;
v est 0, 1, 2 ou 3
y compris les stéréoisomères.

2. Composition herbicide selon la revendication 1, contenant en tant que composant A des composés de formule (I), dans laquelle les symboles et indices ont les significations suivantes ;
R¹ est un groupe alkyle en C₁-C₄ ;
R² est un atome d'hydrogène ou un groupe alkyle en C₁-C₃ ;
R³ est un atome d'halogène, un groupe alkyle en C₁-C₃ ;
R⁴ est un groupe alkyle en C₁-C₄ ;
Z est un atome d'hydrogène ou le groupe benzyle ;
R est un atome d'hydrogène ou un groupe alkyle en C₁-C₄ substitué par v radicaux alcoxy en C₁-C₄ ; ou
NR² représente un radical à 5, 6 ou 7 chaînons, saturé, partiellement saturé, insaturé ou aromatique, contenant c atomes d'azote et t atomes d'oxygène, qui est substitué par v radicaux choisis dans l'ensemble constitué par des atomes d'halogène, des groupes cyano, alkyle en C₁-C₄, cycloalkyle en C₃-C₄, fluoroalkyle en C₁-C₃, alcoxy en C₁-C₄, cycloalcoxy en C₃-C₄, fluoroalcoxy en C₁-C₃ et alcoxy(C₁-C₃)méthyle,
et les autres substituants et indices ont chacun les significations indiquées plus haut.

3. Composition herbicide selon les revendications 1 et/ou 2, contenant en tant que composant B un ou plusieurs composés de formule (II), dans laquelle R⁸ et R⁹ représentent, indépendamment l'un de l'autre, un atome d'hydrogène ou un groupe alkyle en C₁-C₂.

4. Procédé pour la lutte contre des plantes nuisibles, dans lequel on applique ensemble ou séparément en pré-levée, post-levée ou en pré- et post-levée sur les plantes, parties de plantes, semences de plantes ou sur les aires sur lesquelles poussent les plantes, dans son ensemble ou sous forme de composants séparés, une composition herbicide selon une ou plusieurs des revendications 1 à 3.

5. Procédé selon la revendication 4, pour la lutte sélective contre des plantes nuisibles dans des cultures de plantes choisies dans le groupe constitué par le maïs, le blé, le seigle, l'orge, l'avoine, le riz, le sorgho, le coton, la canne à sucre et le soja.

6. Procédé selon la revendication 5, dans lequel les cultures de plantes sont modifiées par génie génétique ou obtenues par mutation-sélection.

7. Utilisation des compositions herbicides définies selon l'une quelconque des revendications 1 à 3, pour la lutte contre des plantes nuisibles.
